# EUROPEAN PATENT APPLICATION

(11) **EP 4 663 788 A1**
(43) Date of publication of application: **17.12.2025**
(21) Application number: 24753726.9
(22) Date of filing: 24.01.2024
(51) Int. Cl.: C22C 1/04, B22F 10/00, C22C 21/02, B33Y 70/10

(54) **ALUMINIUM POWDER MATERIAL FOR ADDITIVE MANUFACTURING OF PARTS**

(30) Priority: 09.02.2023 RU 2023102858
(71) Applicant: Obshchestvo S Ogranichennoj Otvetstvennost'Yu "Institut Legkikh Materialov I Tekhnologij", Moscow 119049 (RU)
(72) Inventor: MANN, Viktor Khrist'yanovich, g. Krasnoyarsk, 660111 (RU); VAKHROMOV, Roman Olegovich, g. Krasnoyarsk, 660111 (RU); RYABOV, Dmitrij Konstantinovich, g. Krasnoyarsk, 660111 (RU); SEFERYAN, Aleksandr Gareginovich, g. Krasnoyarsk, 660111 (RU); MITIN, Vitalij Ivanovich, g. Krasnoyarsk, 660111 (RU); RAHUBA, Evgenij Mikhajlovich, g. Krasnoyarsk, 660111 (RU); TOROPOV, Aleksandr Vladimirovich, g. Krasnoyarsk, 660111 (RU); SUKHENKO, Aleksandr Aleksandrovich, g. Krasnoyarsk, 660111 (RU)
(74) Representative: Atalay, Baris
(86) International application number: PCT/RU2024/050019
(87) International publication number: WO 2024/167440

(57) **Abstract**

The invention relates to powder metallurgy, specifically to aluminium alloy-based powder materials used for manufacturing products by additive techniques, specifically by selective laser melting. The aluminium powder material contains the following components (wt.%): silicon 33.00-45.00, nickel 1.00-3.00, zirconium 0.10-1.00, chromium 0.10-0.80, titanium 0.05-0.50, iron 0.10-0.80, strontium and/or phosphorus 0.005-0.10, copper 0.02 (maximum), manganese 0.02 (maximum) and magnesium 0.02 (maximum). The aluminium powder material is used to manufacture products, which operate in contact with stainless steel, by additive techniques. It provides a low coefficient of thermal expansion, not exceeding 17·10⁻⁶ °C⁻¹, and a yield strength of at least 200 MPa, suitable for producing additive products.

## Description

### Field of the invention

The invention relates to metallurgy, namely to aluminium alloy-based powder materials used for manufacturing products by additive techniques.

### Prior art

Additive manufacturing techniques create three-dimensional objects by layer-by-layer application (addition) of powder materials such as plastic, metal or concrete. Additive manufacturing techniques are used for various applications depending on the desired result, including the production of parts, moulds and finished products. Various layering methods and consumable materials are used in additive manufacturing, some of which involve melting or softening the materials, examples include selective laser sintering, selective laser melting, direct metal laser sintering and printing by layer-by-layer deposition.

The ability of metallic materials and products to spontaneously change their shape and size during the manufacturing or use process, including at high temperatures, presents a major challenge to the precision of machines and devices. Changes in the geometric dimensions of parts and products during the manufacturing and use process primarily result from instability in the material structure, this includes phase transformations occurring within the operating temperature range of the product and the relaxation of residual internal stresses that develop during the manufacturing process.

The primary alloying element used to produce aluminium alloys with a specific coefficient of thermal expansion (CTE) is silicon, which has a CTE of 5.1·10⁻⁶K⁻¹. Therefore, hypereutectic aluminium-silicon alloys containing more than 12% silicon are most commonly used to manufacture parts that require high thermal stability and dimensional consistency during temperature fluctuations. These alloys feature a low CTE similar to that of steels, along with high wear resistance, strength and hardness at elevated temperatures, good corrosion resistance and a high strength-to-weight ratio.

Since the 1970s, various alloys with a low coefficient of thermal expansion (CTE) below 20·10⁻⁶K⁻¹ have been developed to maintain the dimensional stability of products despite changes in ambient temperature. These alloys are also commonly used in precision engineering to manufacture small, rigid structures. The most well-known alloys in this field are the sintered aluminium alloys SAS-1 and SAS-2, designed for device components operating at normal temperatures, where a combination of a low coefficient of linear expansion (14-16·10⁻⁶K⁻¹) and low specific gravity is essential. The alloys have a relatively lower CTE compared to common silumins like AlSi10Mg, which has a CTE of 21·10⁻⁶K⁻¹ measured between 20 °C and 200 °C. However, the main drawback of this alloy series is the high product cost due to the expensive production process, which involves significant investment in pressing equipment, low material utilisation during mechanical machining, and the inability to manufacture products with complex geometric shapes.

Additive manufacturing techniques allow for the production of complex-shaped products with precise dimensions and high material efficiency, minimising the need for mechanical processing.

The most widely recognised aluminium material used in additive manufacturing techniques is the aluminium silicon alloy AlSi10Mg, which contains 9-11 wt.% silicon and 0.20-0.60 wt.% magnesium. The AlSi10Mg alloy has a tensile strength of 320 MPa, a yield strength of 210 MPa and a CTE of 21·10⁻⁶K⁻¹, it demonstrates excellent processability in selective laser melting. However, because of its low thermal stability and high CTE, it has seen limited use in precision instrumentation.

Therefore, developing materials with specific mechanical properties and a coefficient of thermal expansion (CTE) suitable for the operating temperature range remains an important challenge for manufacturing products using additive techniques.

Patent WO 2017077137 A9, published on July 6, 2017, describes an aluminium alloy utilised in a method for manufacturing metal parts. In addition to the primary alloying elements, the levels of impurities -whether intentionally added to achieve specific functional properties or unintentionally introduced through the primary alloying elements and waste materials used in production - are controlled. For the impurity elements H, He, Xe, F, Ne, Na, P, S, Cl, Ar, K, Br, Kr, Sr, Tc, Ru, Rh, Pd, Ag, I, Ba, Pr, Nd, Pm, Sm, Eu, Gd, Tb, Dy, Ho, Er, Tm, Yb, Lu, Re, Os, Ir, Pt, Au, Hg, Tl, Po, At, Rn, Fr, Ra, Ac, Th, Pa, U, Np, Pu, Am, Cm, Bk, Cf, Es, Fm, Md, No, Lr, Rf, Db, Sg, Bh, Hs and Mt, a maximum content of 1.8% is allowed, however, for certain elements, a content below 0.03% is preferred.

The primary drawback of this alloy is its high copper content (up to 20%) and magnesium content (up to 50%), which extend the alloy crystallisation range and cause hot cracking in its structure. Additionally, excessive alloying can lead to cold cracking during selective laser melting due to the build-up of high internal stresses from the formation of numerous intermetallic phases. Furthermore, adding scandium (up to 10 wt.%) to the alloy composition significantly increases the production cost of products made from this alloy.

Patents RU 2353689, published on April 27, 2009, and RU 2394928, published on July 20, 2010, describe composite powder materials containing silicon, nickel, beryllium, aluminium oxide and carbon, which are produced through mechanical alloying followed by vacuum pressing for compaction. The produced materials have a uniformly dispersed structure, which ensures high stability of their precise tension characteristics.

The primary drawback of the proposed composite materials is the complex production process, which requires vacuum pressing for compaction, which makes it impossible to manufacture complex-shaped products with internal channels or a cellular structure. Another drawback of these composite materials is the inclusion of toxic beryllium in their composition.

Patent RU 2468105, published on November 27, 2012, describes a deformable aluminium alloy for piston manufacturing, in addition to aluminium as the primary component, the alloy contains the following elements (wt.%):

| | |
|---|---|
| Silicon | 16.0-19.5; |
| Copper | 3.0-5.0; |
| Magnesium | 0.7-1.2; |
| Manganese | 0.3-0.7; |
| Iron | 0.9-1.5; |
| Titanium | 0.2-0.5; |
| Zirconium | 0.15-0.4; |
| Aluminium oxide | 0.01-0.3; |
| Cerium | 0.001-0.005; |
| Nickel | up to 1.3. |

The proposed alloy compositions offer wear resistance and high strength at both room and elevated temperatures. The primary drawback of the proposed alloy is its relatively high CTE of 17-18·10⁻⁶K⁻¹, which is due to its low silicon content and the presence of copper, magnesium and manganese, all of which have high CTE values. Additionally, the high copper and magnesium content in the alloy can negatively impact its processability during selective laser melting, as it promotes the formation of hot cracks in the structure of the melted material.

Patent RU 2639088, published on December 19, 2017, describes a composite powder material containing the following components by weight percentage (wt.%):

| | |
|---|---|
| Copper | 4-6 |
| Boron carbide | 1-8 |
| Aluminium | balance. |

The main drawback of the specified composite material is its relatively high CTE, which ranges from 19 to 21·10⁻⁶K⁻¹, depending on the content of alloying components. Additionally, a high copper content in the material can cause hot cracking during selective laser melting.

Patent RU 2533512, published on November 20, 2014 and used as a prototype, describes a composite powder material containing the following components by weight percentage (wt.%):

| | |
|---|---|
| Silicon | 41.0-45.4 |
| Nickel | 3.9-5.6 |
| Aluminium oxide | ≤ 2.8 |
| Iron | ≤ 0.48 |
| Aluminium | balance. |

The resulting material exhibits high dimensional stability, low specific gravity and a low CTE of approximately 12·10⁻⁶K⁻¹. The primary drawback of this composite powder material is its complex production process, which includes mechanical alloying of the mixture and gas-static pressing in aluminium capsules, this process limits the ability to produce complex-shaped products without requiring additional mechanical processing of the resulting blanks.

Matching the coefficients of thermal expansion (CTE) of the materials being joined is crucial for maintaining the dimensional stability of the product, proper alignment of components, adherence to design tolerances, joint tightness, desired wave characteristics, etc. Most stainless steels used in instrument manufacturing, such as austenitic steels from the 300 series, such as AISI 316L, AISI 304, AISI 309, have a CTE ranging from 15 to 17·10⁻⁶K⁻¹, therefore, to partially or fully replace product components, aluminium alloys with a CTE below 17·10⁻⁶K⁻¹, which contain more than 30% silicon, should be used. Replacing stainless steel with aluminium alloy can reduce the weight of devices without compromising their technical performance. For example, using a low-CTE aluminium alloy instead of stainless steel to manufacture a complex-profile waveguides reduces the overall weight of the device (including the waveguide and irradiator) while preserving the waveguide losses and standing wave ratio. Additionally, using a low-CTE aluminium alloy as the base material for reflective surfaces or frame structures in optical devices reduces the weight of the devices while maintaining low distortion values caused by thermal expansion during heating.

### Disclosure of the invention

The technical objective and outcome of the invention is the development of a new powder aluminium material with a low coefficient of thermal expansion (not exceeding 17·10^{-6o}C⁻¹) and a yield strength of at least 200 MPa, this material is designed for manufacturing products using additive techniques and is compatible for use in contact with various types of stainless steel.

To address this issue, a composition of powder aluminium material was developed, along with a method for producing a compact material obtained from the composition using additive manufacturing techniques, ensuring dimensional stability and strength in products that operate in contact with steel and other materials having similar temperature coefficients of linear expansion (TCLE) across a range of temperatures, particularly by the formation of primary silicon crystals smaller than 20 µm, evenly distributed throughout the synthesised material, along with matrix strengthening through solid solution and dispersion hardening with thermally stable phases.

The technical problem is solved, and the desired result is achieved by producing an aluminium powder material containing the following elements in these proportions (wt.%):

| | |
|---|---|
| silicon | 33.00-45.00 |
| nickel | 1.00-3.00 |
| zirconium | 0.10-1.00 |
| chromium | 0.10-0.80 |
| titanium | 0.05-0.50 |
| iron | 0.10-0.80 |
| strontium and/or phosphorus | 0.005-0.10 |
| copper | maximum 0.02 |
| manganese | maximum 0.02 |
| magnesium | maximum 0.02 |
| aluminium and unavoidable impurities | balance. |

The powder material preferably has a particle size distribution between 20 and 150 µm, with the most preferred range between 20 and 63 µm. The powder material can be produced by gas atomisation in a nitrogen or argon atmosphere, or in a nitrogen or argon atmosphere containing 0.1 to 0.8 wt.% oxygen. The powder material has a coefficient of thermal expansion not greater than 17·10⁻⁶ °C⁻¹ and a minimum yield strength of 200 MPa.

A method for manufacturing a product using additive techniques is also claimed, which utilises the aforementioned aluminium powder material.

A product manufactured from the aforementioned aluminium powder material is also claimed.

### Brief description of the drawings

The figures show:
Fig. 1 shows an external view of the powder particles of the proposed alloy, produced by gas atomisation as described in Embodiment 1 of the invention;
Fig. 2 shows a cross-sectional view of a powder granule;
Fig. 3 shows an external view of the synthesised cubic samples used to determine the optimal parameters for selective laser melting;
Fig. 4 shows images of the microstructure of the synthesised alloy material No 5 from Embodiment 1 of the invention;
Fig. 5 shows macro cracks in the structure of the prototype material produced using selective laser melting technology;
Fig. 6 shows the microstructure of the prototype material produced by selective laser melting technology;
Fig. 7 shows an external view of sample blanks prepared for testing according to GOST 1497-84;
Fig. 8 shows images of the microstructure of a synthesised sample of alloy A from Embodiment 2 of the invention, illustrating changes based on annealing time at 350 °C;
Fig. 9 shows an external view of a platform holding products (concave and convex blanks for manufacturing mirrors) produced from the proposed material using selective laser melting technology.

### Embodiment of the invention

Silicon content ranging from 33.00 to 45.00 wt.% is selected to achieve lower thermal expansion values. The upper limit is selected because crystallisation during printing initially forms primary silicon crystals, significantly increasing the material brittleness and resulting in cracks in the printed products.

Iron alloying within the range of 0.10 to 0.80 wt.% promotes the formation of insoluble intermetallic inclusions composed of aluminium, silicon and iron, which contribute to additional matrix hardening and improve the thermal stability of the alloy. Moreover, iron does not raise the alloy cost, nor it adversely affects the increase in TCLE.

Nickel is added in the range of 1.00-3.00 wt.% to achieve the desired coefficient of thermal expansion for the alloy and to improve its manufacturability using additive manufacturing techniques, due to the formation of Al₃Ni eutectic phases, which enhance the liquid fluidity of the alloy and reduce the risk of hot cracking. Additionally, the Al₃Ni phase exhibits high thermal stability, enabling the material to retain its properties during heat treatment and at elevated operating temperatures. Furthermore, nickel reduces the detrimental impact of iron on ductility by creating a joint ternary phase and lowering the quantity of the iron-silicon-aluminium-based phase.

Alloying with zirconium (0.10-1.00 wt.%), chromium (0.10-0.80 wt.%) and titanium (0.05-0.50 wt.%) promotes dispersion hardening of the alloy matrix by causing solid solution decomposition during thermal processing. Additionally, chromium slows down the diffusion of nickel in the solid solution during thermal processing and promotes the formation of small Ni₃Al crystals evenly distributed throughout the matrix, which improves the matrix strength and thermal stability. The content of zirconium, chromium, and titanium is restricted because high concentrations lead to a substantial increase in intermetallic phases and internal stresses, and due to the low ductility of Al-33-45%Si alloys, this promotes the formation of cold cracks during selective laser melting.

The addition of 0.005-0.10 wt.% strontium and/or phosphorus facilitates the spheroidisation and refinement of primary silicon particles, thereby improving the strength characteristics of the material.

The content of copper, manganese and magnesium in the proposed alloy is restricted to no more than 0.02 wt.% since these elements possess high CTE, which would adversely affect the overall CTE of the alloy. Elevated levels of copper and magnesium extend the alloy crystallisation interval, leading to hot cracking during rapid crystallisation. Additionally, magnesium deteriorates the alloy resistance to hot fracture, which negatively impacts printability. Moreover, the formation of manganese-based intermetallic phases requires high-temperature treatment, which causes the growth of primary silicon crystals and Al₃Zr phases, negatively impacting the alloy strength.

The production of aluminium powder material can involve the following operations:
- preparation of an aluminium-based melt with the desired chemical composition, either from pre-melted material or directly in the atomiser crucible;
- gas atomisation of the alloy melt using either vertical or horizontal atomisers, employing nitrogen, argon or their mixtures with oxygen as the atomising gas;
- sieve screening and gas-dynamic separation of the produced pulverised powder to isolate the desired particle size fraction.

The present invention is illustrated by the following embodiments.

### Embodiment 1

In the furnace of a horizontal atomiser, a melt of aluminium of at least grade A7 (according to GOST 11069-2001) was prepared, thereafter crystalline silicon of grade Kr00 (according to GOST 2169-69) was added in several stages, while maintaining the melt temperature. Once the silicon was fully dissolved, metallic nickel of grade H0 (according to GOST 849-2008), metallic chromium of grade X99 (according to GOST 5905-2004), and master alloys AlZr15 and AlTi5 (according to GOST R 53777-2010) were added, iron was added in the form of Fe80F20 tablets, comprising 80% iron and 20% flux.

Once all introduced master alloys had dissolved, slag was removed, and carnalite flux was added to the melt surface at a rate of 2 kg/t to reduce the loss of alloying elements. Following flux melting, AlSr5 and/or phosphorus master alloy according to GOST R 53777-2010 was introduced beneath the flux layer, subsequently, the slag was removed, and samples were collected to verify the chemical composition.

The levels of manganese, magnesium and copper were ensured by the purity of the master alloys employed.

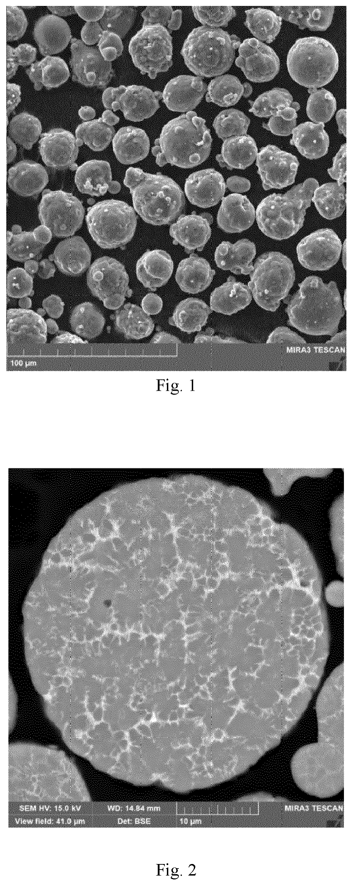

Powders were produced on a horizontal gas atomiser employing a nitrogen-oxygen mixture with an oxygen content not exceeding 0.8%. The powder produced by atomisation was processed through sieving and gas-dynamic separation to isolate the target fraction of 20-63 µm, with a median particle size (D50) of 45±3 µm. A scanning electron microscope image of a powder granule is shown in Fig. 1, with its cross-section presented in Fig. 2.

An inductively coupled plasma atomic emission spectrometer was used to determine the chemical composition of the obtained powders (Table 1). Laser diffraction was used to examine the particle size distribution of the powders.

**Table 1**

| Composition No | Elemental composition, wt.% | | | | | | | | | | | |
|---|---|---|---|---|---|---|---|---|---|---|---|---|
| | Al | Si | Ni | Fe | Zr | Cr | Ti | Sr | P | Mn | Mg | Cu |
| 1 | Bal. | 35.0 | 3.0 | 0.7 | 0.1 | 0.80 | 0.4 | 0.02 | 0.005 | 0.010 | 0.003 | 0.009 |
| 2 | | 37.6 | 2.5 | 0.6 | 0.6 | 0.40 | 0.1 | 0.005 | - | 0.003 | 0.006 | 0.001 |
| 3 | | 39.9 | 2.8 | 0.8 | 0.9 | 0.30 | 0.1 | 0.02 | 0.03 | 0.008 | 0.002 | 0.005 |
| 4 | | 41.0 | 2.0 | 0.6 | 1.0 | 0.35 | 0.5 | - | 0.1 | 0.002 | 0.006 | 0.003 |
| 5 | | 43.0 | 1.7 | 0.1 | 0.4 | 0.10 | 0.05 | 0.03 | - | 0.008 | 0.005 | 0.006 |
| 6 | | 45.0 | 2.7 | 0.7 | 0.4 | 0.50 | 0.2 | 0.1 | - | 0.007 | 0.006 | 0.005 |
| Prototype | | 44.1 | 4.5 | 0.36 | | | | | | | | |

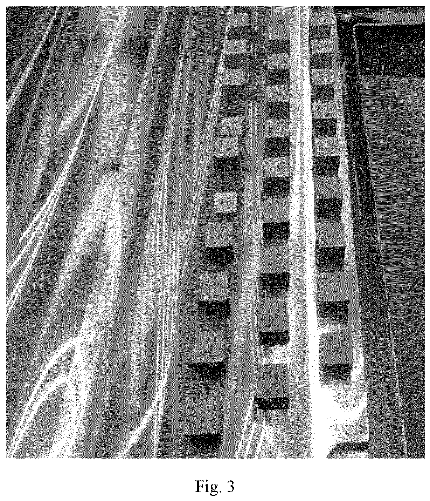

The processability of the obtained powder materials during selective laser melting was evaluated. For this purpose, an SLS EOS M 290 machine was used. Cubic samples (10 × 10 × 10 mm) for each material were produced under tailored melting conditions, varying laser power, scanning speed and inter-track distance. The laser power ranged from 200 to 370 W, the scanning speed from 400 to 2,000 mm/s, and the inter-track distance from 0.075 to 0.22 mm. An external view of a platform with the synthesised cubic samples is shown in Fig. 3.

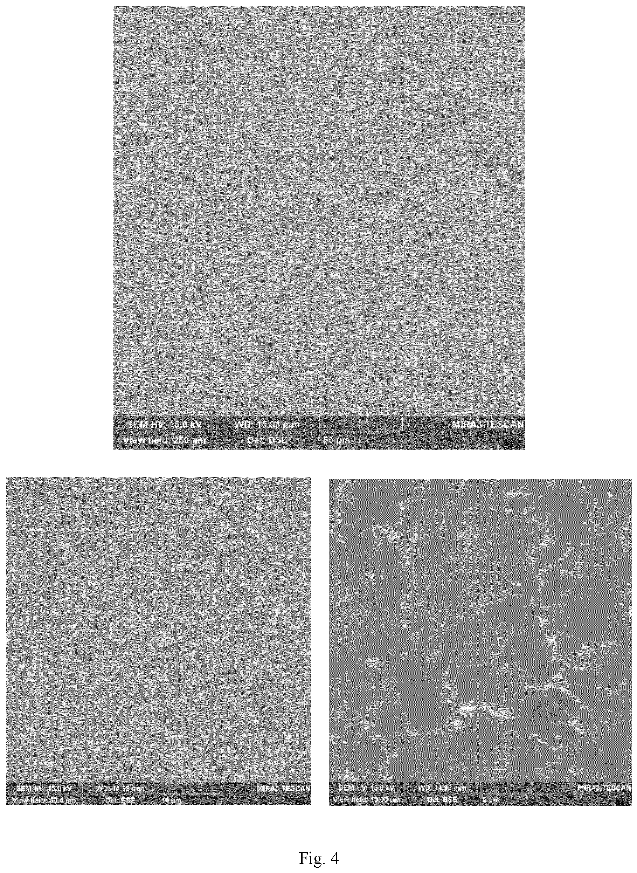

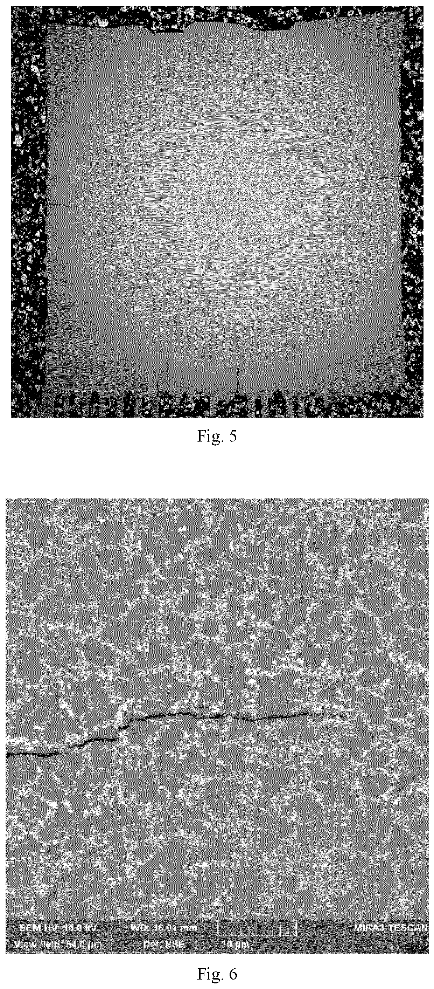

The structure of the synthesised metal was examined for defects using microsections cut along the manufacturing direction (perpendicular to the layers). The number of pores, non-fusion defects, and hot and cold cracks was determined using bright-field light microscopy at 100× magnification, examining at least five different fields of view on the section under study. The arithmetic mean of the pore and non-fusion proportions across the examined fields of view was used as the overall value. Examples of the optimal structure of synthesised material No 5 from Table 1, as observed under a scanning electron microscope, are shown in Fig. 4. Selective laser melting of the prototype material (Table 1) resulted in the formation of macro cracks across a wide range of energy and velocity parameters. Fig. 5 shows an image of macro cracks in the structure of the synthesised prototype material. Fig. 6 shows the microstructure of the prototype material after selective laser melting. It is evident that cracks propagate through the eutectic phase as well as the primary silicon crystals, suggesting that these cold cracks result from significant internal residual stresses after the melt bath solidifies.

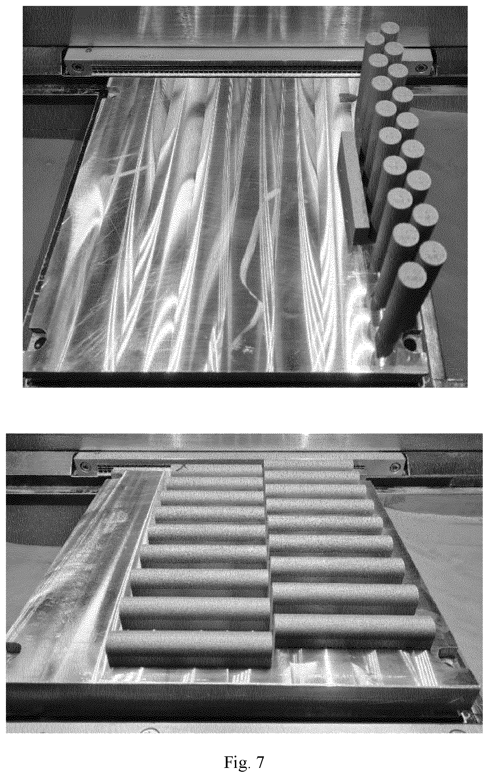

After determining the optimal selective laser melting parameters, cylindrical blanks measuring 14 mm in diameter and 85 mm in length were produced in two orientations - parallel and perpendicular to the growth direction - to evaluate their strength characteristics and coefficient of thermal expansion (Fig. 7). Before machining, the samples were heat-treated by annealing at 300 °C for 2 hours. Cylindrical sample blanks were synthesised and then used to produce samples according to GOST 1497-84, type 3, No 7. Tensile tests were conducted in accordance with GOST 1497-84, using a universal tensile testing machine (MTS Criterion 40). The coefficient of thermal expansion was measured using a DIL 402 Expedis Select dilatometer.

Table 2 presents the results of the mechanical property and coefficient of thermal expansion measurements. The mechanical characteristics of the prototype material could not be determined because it was impossible to produce a sample without macro cracks using selective laser melting technology.

**Table 2**

| No | Direction | Tensile strength, MPa | Yield strength, MPa | Elongation, % | Coefficient of thermal expansion, 10⁻⁶ °C⁻¹, for the range of 20-200 °C | Porosity % |
|---|---|---|---|---|---|---|
| 1 | XY | 315 | 245 | 0.8 | 16.5 | 0.25 |
| | Z | 265 | 245 | 0.4 | | |
| 2 | XY | 310 | 245 | 0.8 | 15.9 | 0.29 |
| | Z | 255 | 235 | 0.3 | | |
| 3 | XY | 320 | 240 | 0.7 | 15.4 | 0.22 |
| | Z | 270 | 235 | 0.4 | | |
| 4 | XY | 300 | 230 | 0.5 | 15.3 | 0.15 |
| | Z | 235 | 225 | 0.2 | | |
| 5 | XY | 320 | 245 | 0.6 | 14.0 | 0.32 |
| | Z | 275 | 250 | 0.3 | | |
| 6 | XY | 315 | 245 | 0.5 | 13.5 | 0.37 |
| | Z | 255 | 240 | 0.3 | | |

The data in Tables 1 and 2 demonstrate that the proposed aluminium powder material can produce a solid structure free of hot or cold cracks, exhibits improved mechanical properties after selective laser alloying and has CTE values comparable to those of austenitic stainless steels manufactured using selective laser melting methods.

### Embodiment 2

The melt was prepared in the crucible of a SELT-IPU-15A/20-NR laboratory furnace following the procedure described in Embodiment 1. After preparing the melt, the alloy was poured into steel moulds, and the resulting ingots were cut into pieces measuring 50 × 50 × 300 mm. After confirming the chemical composition, the ingots were placed into the crucible of a vertical atomiser and gas-atomised in a grade 4.8 (99.998%) argon atmosphere, from the resulting pulverised powder, the target particle size fraction of 20-63 µm with a median particle size (D50) of 45±3 µm was collected. Table 3 shows the chemical composition of the resulting powder.

**Table 3**

| Composition No | Al | Si | Ni | Fe | Zr | Cr | Ti | Sr | Mn | Mg | Cu |
|---|---|---|---|---|---|---|---|---|---|---|---|
| A | balance | 42.8 | 1.7 | 0.7 | 0.7 | 0.20 | 0.3 | 0.03 | 0.009 | 0.015 | 0.01 |

Cubic samples were produced from the resulting powder using the process described in Embodiment 1 to determine the optimal selective laser melting parameters, and cylindrical sample blanks were manufactured with their orientation perpendicular to the growth direction.

The obtained sample blanks were aged at 350 °C for durations of 2, 14 and 20 hours. Samples were made from the heat-treated sample blanks according to GOST 1497-84, type 3, No 7. Tensile tests were performed at room temperature in accordance with GOST 1497-84. Table 4 presents the results of the mechanical property tests.

**Table 4**

| Annealing time at 350 °C, h | Tensile strength, MPa | Yield strength, MPa | Elongation, % | Coefficient of thermal expansion, 10⁻⁶ °C⁻¹, for the range of 20-200 °C |
|---|---|---|---|---|
| 2 | 300 | 225 | 0.3 | 13.7 |
| 14 | 320 | 245 | 0.6 | 14.5 |
| 20 | 310 | 240 | 0.5 | 14.6 |

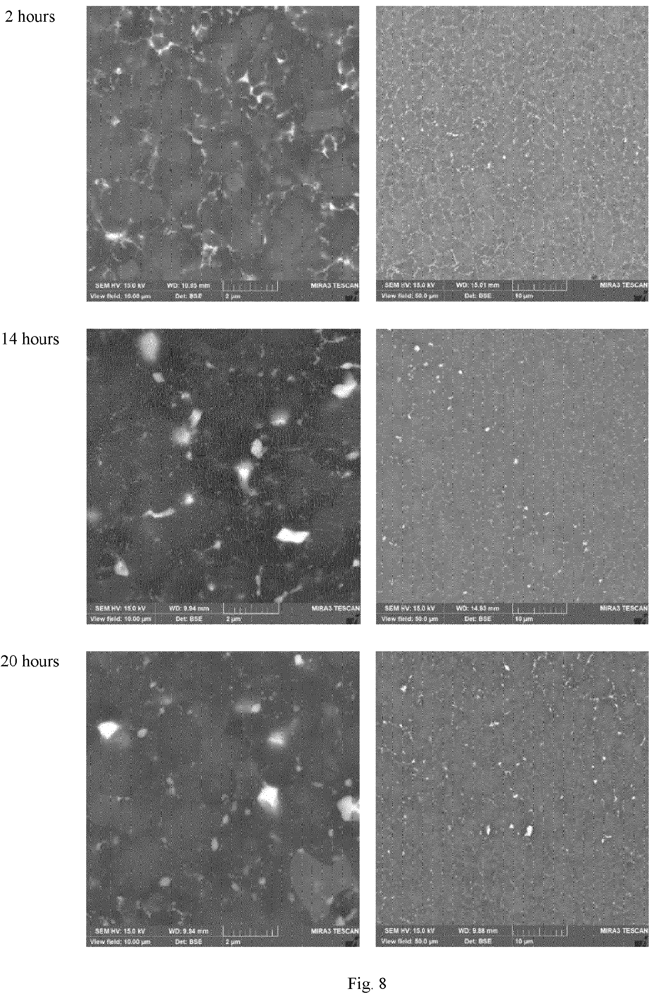

Table 4 shows that long-term annealing stabilises the mechanical properties (tensile strength and yield strength) and physical properties (CTE) of the material, enabling its use over a wide range of operating temperatures without significant performance loss. The reduced CTE of the alloy after 2 hours of annealing results from rapid crystallisation during selective laser melting, which occurs at rates of 10³-10⁶ K/s, which causes supersaturation of the solid solution and lattice distortion, both of which lower the CTE, and because the alloy contains elements that form thermally stable phases, the decomposition of this supersaturated solid solution during heat treatment proceeds quite slowly. Fig. 8 shows photographs of the alloy microstructure following each heat treatment listed in Table 4.

### Embodiment 3

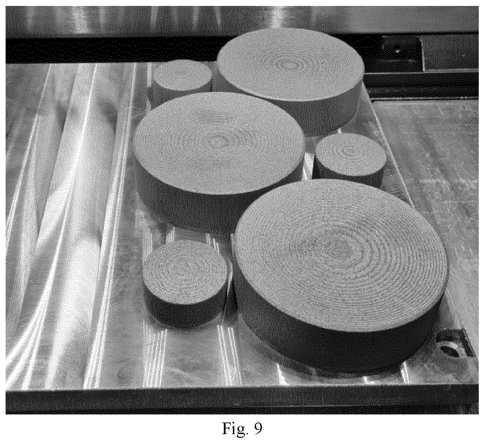

The aluminium powder material produced in Embodiment 2 using an EOS M 290 machine, following the optimal selective laser melting parameters determined in Embodiment 2, was used to manufacture items such as concave and convex mirrors. The products were heat-treated by annealing at 350 °C for 14 hours. After heat treatment, the products were removed from the build platform and polished. An external view of a platform holding concave and convex blanks for manufacturing mirrors is shown in Fig. 9.

### Embodiment 4

The melt was prepared in the crucible of a SELT-IPU-15A/20-NR laboratory furnace following the procedure described in Embodiment 1. After preparing the melts, the alloys were cast into steel moulds, and the resulting ingots were cut into pieces measuring 50 × 50 × 300 mm. After verifying the chemical composition, the ingots were placed into the crucible of a vertical atomiser and gas-atomised in two different atmospheres: an argon atmosphere containing 0.6% oxygen (composition A) and high-purity nitrogen of the grade 2 according to GOST 9293-74 (composition B). The target powder fraction of 63-150 µm, with a median particle size (D50) of 100±5 µm, was separated from the resulting pulverised powder. Table 5 presents the chemical composition of the obtained powders.

**Table 5**

| Composition No | Al | Si | Ni | Fe | Zr | Cr | Ti | Sr | Mn | Mg | Cu |
|---|---|---|---|---|---|---|---|---|---|---|---|
| A | balance | 39.6 | 1.0 | 0.2 | 0.35 | 0.1 | 0.16 | 0.05 | 0.018 | 0.02 | 0.02 |
| B | balance | 33.0 | 1.4 | 0.3 | 0.24 | 0.13 | 0.21 | 0.06 | 0.02 | 0.012 | 0.015 |

Cubic specimens for porosity analysis and two horizontal specimens were produced from the obtained powders using direct energy deposition (DED) technology on an Insstek MX-1000 machine, at laser powers of 600 and 700 W with a scanning speed of 850 mm/min, additionally, two samples from each specimen were cut for tensile testing.

The obtained sample blanks were aged at 350 °C for 14 hours. Tensile tests were performed at room temperature in accordance with GOST 1497-84. Table 6 presents the results of the mechanical property and CTE measurements for the alloys.

**Table 6**

| Composition No | Tensile strength, MPa | Yield strength, MPa | Elongation, % | Coefficient of thermal expansion, 10⁻⁶ °C⁻¹, for the range of 20-200 °C |
|---|---|---|---|---|
| A | 270 | 210 | 0.8 | 14.0 |
| B | 275 | 215 | 1.0 | 15.5 |

A new aluminium powder material for additive manufacturing has been developed, featuring a low coefficient of thermal expansion not exceeding 17·10⁻⁶ °C⁻¹ and a yield strength of at least 200 MPa, and suitable for use in products that come into contact with various types of stainless steel.

Protection is claimed for an aluminium powder material for additive manufacturing, containing silicon, nickel, zirconium, chromium, titanium, iron, strontium and/or phosphorus, copper, manganese and magnesium, with the following component content, including aluminium and associated impurities, in wt.%:

| | |
|---|---|
| silicon | 33.00-45.00 |
| nickel | 1.00-3.00 |
| zirconium | 0.10-1.00 |
| chromium | 0.10-0.80 |
| titanium | 0.05-0.50 |
| iron | 0.10-0.80 |
| strontium and/or phosphorus | 0.005-0.10 |
| copper | maximum 0.02 |
| manganese | maximum 0.02 |
| magnesium | maximum 0.02 |

The powder material preferably has a particle size distribution ranging from 20 to 150 µm and can be produced by gas atomisation in a nitrogen or argon atmosphere, optionally with the addition of 0.1-0.8 wt.% oxygen. The powder material has a coefficient of thermal expansion not greater than 17·10⁻⁶ °C⁻¹ and a minimum yield strength of 200 MPa.

Protection is also claimed for a method for producing a product from the specified aluminium powder material using additive manufacturing techniques, as well as the product itself produced from this aluminium powder material using additive manufacturing techniques.

## Claims

1. Aluminium powder material for additive manufacturing, containing silicon, nickel, zirconium, chromium, titanium, iron, strontium and/or phosphorus, copper, manganese and magnesium, with the following component content, including aluminium and associated impurities, in wt.%:
| | |
|---|---|
| silicon | 33.00-45.00 |
| nickel | 1.00-3.00 |
| zirconium | 0.10-1.00 |
| chromium | 0.10-0.80 |
| titanium | 0.05-0.50 |
| iron | 0.10-0.80 |
| strontium and/or phosphorus | 0.005-0.10 |
| copper | maximum 0.02 |
| manganese | maximum 0.02 |
| magnesium | maximum 0.02 |

2. The powder material according to claim 1, **characterised by** having a particle size distribution between 20 and 150 µm.

3. The powder material according to claim 1, **characterised in that** it is produced by gas atomisation in a nitrogen or argon atmosphere.

4. The powder material according to claim 1, **characterised in that** it is produced by gas atomisation in a nitrogen or argon atmosphere, with the addition of 0.1-0.8 wt% oxygen.

5. The powder material according to claim 1, **characterised by** having a coefficient of thermal expansion not exceeding 17·10⁻⁶ °C⁻¹ and a yield strength of at least 200 MPa.

6. A method for producing a product from aluminium powder material using additive manufacturing techniques, **characterised in that** the product is produced from the aluminium powder material according to any of claims 1-5.

7. A product from aluminium powder material, produced using additive manufacturing techniques, **characterised in that** it is obtained by the method according to claim 6, from the powder material according to any of claims 1-5.
